# EUROPEAN PATENT SPECIFICATION

(11) **EP 0 370 804 B1**
(45) Date of publication and mention of the grant of the patent: **14.09.1994**
(21) Application number: 89312154.1
(22) Date of filing: 22.11.1989
(51) Int. Cl.: B65D 45/30, F16L 23/06

(54) **Lever catch**
Sperrhebel
Levier de verrouillage

(30) Priority: 22.11.1988 GB 8827268; 16.11.1989 GB 8925840
(43) Date of publication of application: 30.05.1990
(73) Proprietor: UNIVERSAL PRESSWORK LIMITED, Birmingham West Midlands, B19 3DE (GB)
(72) Inventor: Hirons, Stephen, Tamworth Staffordshire B79 8ND (GB)
(74) Representative: Symes, Christopher A.

(56) References cited:
- EP-A- 0 226 552
- FR-A- 1 493 556
- FR-A- 2 302 932
- US-A- 3 091 489

## Description

The present invention relates to a lever catch, primarily but not exclusively intended for co-operation with a band adapted to secure a lid of a container.

Lever catches for use with a band that secures the lid of a container are known, see e.g. FR-A-2 302 932 and EP-A-0 226 552. However, known examples have suffered from the disadvantages of either being cumbersome and expensive to manufacture or unreliable in use in that undesired release of the catch can easily occur.

It is an object of the present invention to provide a new or improved catch that overcomes or minimises the above mentioned difficulties.

According to one aspect of the present invention, we provide an overcentre catch adapted for securing a first member relative to a second member according to claim 1.

Said first and second members comprise the respective end portions of a part annular band adapted to secure the lid of a container.

Preferably the connection between said first part and said first member comprises a projection on said first part adapted to cooperate with a keyhole type aperture in said first member, the dimensions of said projection and said keyhole type aperture being such that said first part may be placed in abutment with said first member such that said projection projects through a part of said keyhole-like aperture whereafter relative sliding movement between said first part and said first member is possible so that said projection locates in a part of said aperture so that the two parts are engaged, whereupon relative rotational movement between said first part and said first member is possible so that said first part may take a proper secured position relative to said first member.

Alternatively, said projection on said first member comprises a tongue formed from the material of said first member and pressed-out therefrom.

Said first part includes additional securing means adapted to cooperate with said first member when said first part and said first member are in their proper secured positions.

Conveniently, said further securing means may comprise a projection provided on said first part and adapted to be deformed so as to engage with said first member.

Preferably said third part comprises an elongate hook-like member pivotally connected to said second part at one end thereof, the other end being provided with a hook adapted to be engageable within a recess provided in said second member.

Preferably said second part comprises a lever like member pivotally connected at one end to said first part and conveniently the pivotal connection with said third part is positioned such that the distance between the first pivotal connection and said second pivotal connection is considerably shorter than the distance between said second pivotal connection and the end of said second part remote from the end provided with said first pivotal connection.

Preferably, said first part and said second part are dimensioned such that when the catch is in its secured position said first part is accommodated within at least part of said second part.

Conveniently, said second part is dimensioned, such that when used with a band to secure the lid of a container, said second part overlies said band so that at least a part of said band is within the dimensions of said second part.

Preferably, the second part is a channel section, the walls of the channel being intended to overlie said band at least in part and the walls being of a sufficient height such that when said catch means is used on a band of relatively small diameter, there may be appreciable overlap between the walls of the channel member and the band and when used with a band of larger diameter there may be a small overlap or substantially no overlap, the walls being of sufficient height to prevent any substantial gap between the second part and said band.

The provision of such a feature enables the catch to be used on different diameters of band whereas previously it had been the case that catches were designed specifically for a band of a certain diameter.

Preferably, interference means are provided on said first and said second part and conveniently said interference means may comprise a projection one of said parts and an aperture or recess on other, said projection and recess being adapted to cooperate with each other when said catch is in its securing position.

To enable proper operation of the interference means, and to enable the catch to be used on different diameter bands, the aperture or recess on the other part is made elongate or of a diameter greater than is necessary to accommodate the projection on said one part.

Such a feature enables different relative positions of the first and second parts when in their secure position, said interference means still enabling proper interaction to prevent undesired release from the secure position.

Said first and second parts may be provided with additional security means to prevent undesired release of the catch and may comprise an aperture in each part which are aligned with each other when the catch is in its securing position to enable a securing element to pass through said apertures to prevent relative movement of said first part and said second part and hence release of said catch.

Preferably, said first and said second parts are made from a metallic material and conveniently may comprise metal pressings.

Said third part may be made from any desired material and conveniently may be made from metallic wire.

Said third part is preferably formed in a configuration such that in use it deviates from a position adjacent its second attachment and its connection to said second part so that when the catch is in a securing position and said third part is under tension the configuration of said third part may alter so that it takes up a position nearer to a straight line so as to conveniently provide for accommodation of slight variations in difference in dimension between its connection to the second part and its attachment to said second member.

The invention will now be described in more detail by way of example only with reference to the accompanying drawings, wherein:-
FIGURE 1 is a perspective view of one embodiment of catch of the present invention and part of a band for securing a lid to a container;
FIGURE 2 is a diagrammatic view of the catch on a container;
FIGURE 3 is a cross-sectional view along the line A-A shown in Figure 3;
FIGURE 4 illustrates the catch in a secured position and in a released position in dotted outline;
FIGURE 5 is an illustration of an alternative design of first part and first member;
FIGURE 6 is an enlarged view of the engagement means between the first part and said first member.

Referring to the Figures, the catch is generally indicated at 10 and comprises a first part 11, a second part 12 and a third part 13.

The catch is shown cooperating with a band 14 having a first end 15 and a second end 16.

The first part 11 of the catch 10 comprises a U-section metal pressing having a base part 20 and side walls 21 and 22. The base 20 is provided with a stud-like projection, part of which can be seen at 23, the outer part of which has a diameter that can just pass through aperture 24 provided in end 15 of the band 14.

The first part 11 of the catch 10 is pivotally secured about a first pivotal axis 35 to a second part 12.

The second part 12 comprises a lever like member which carries a pivotally mounted third part 13 pivotally mounted thereto about a second pivotal axis 36.

The outer end of the third part 13 is provided with a hook-like formation 37 adapted to engage within an aperture 38 provided in the end 16 of band 14.

In order to secure the catch to the band 14, first the hook 37 provided on the third part 13 is engaged within an aperture 38 on the end 16 of the band 14. Engagement is possible by locating the hook part 37 through the aperture 38 when the catch as a whole is substantially at right angles to the axis of band 14.

Because of possible angular movement between the catch and the band 14, even when the hook 37 is engaged within aperture 38, the first part 11 having the stud-like projection 23 can be engaged with the other end 15 of the band 14.

The stud-like projection 23 has a neck part 25, shown in dotted outline, so that once the projection 23 has been passed through the aperture 24 in the end 15 of band 14 the first part 11 may be slid towards the end 15 so that the stud-like projection 23 is trapped behind the band 14 and hence the two parts are secured together.

In order to secure the first part 11 to the end 15 of the band 14, the securement as aforementioned takes place after the hook 37 has been engaged within aperture 38 in the end 16 of band 14.

The first part 11 is brought into proximity with the end 15 of the band 14 at an angle relative thereto, such angular displacement being possible because of the "flexibility" of the coupling between the hook 37 and aperture 38 and the stud-like projection 23 is passed through aperture 24. The first part 11 is then slid towards the end 15 of band 14 so that the stud-like projection 23 is trapped behind the band 14.

The chamfered corner 27 of the band then permits of relative angular movement between the first part 11 and the end 15 of the band so that the first part 11 is substantially aligned with the band 14 after which the tang 28 may be further deformed so that it is substantially parallel with the base 20 of the first part and then the first part is firmly secured to the band 14.

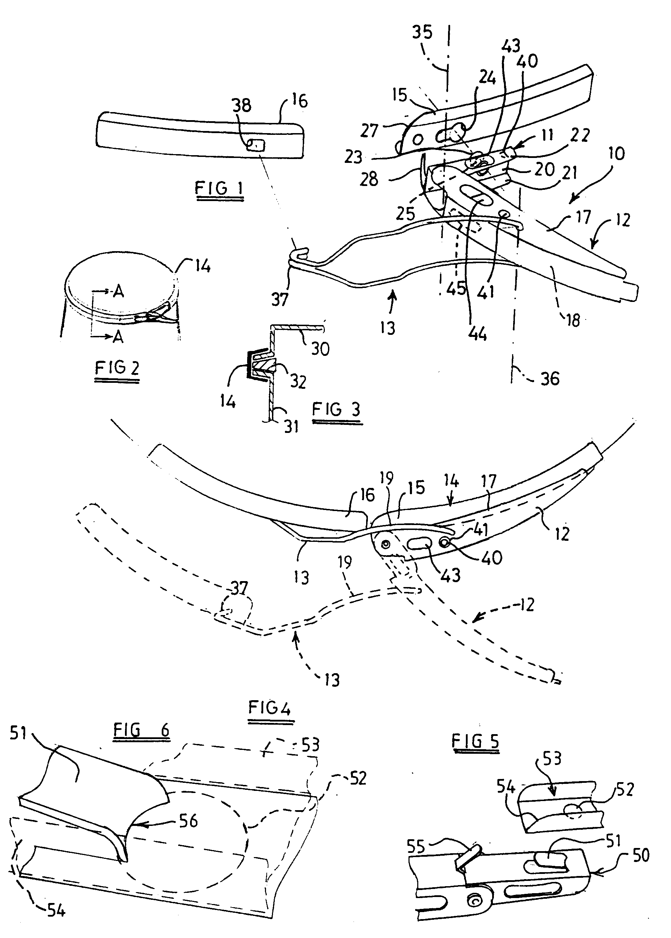

The band 14 and catch are then in an assembled position so that the band 14 may be used to secure a lid 30 to a container 31 as shown in Figures 2 and 3.

The lid 30 is placed on the container 31, a sealing ring 32 being placed between the lid 30 and the container 31 and the band 14 placed in position around the outwardly directed flanges provided on the lid 30 and the container 31.

Once the catch has been secured to the band 14 and the band placed in position around the lid 30 and container 31, the hook 37 provided on third part 13 is engaged within aperture 38. The catch is then in a position substantially as shown in broken outline in Figure 4 and the second lever part 12 is then moved in an anti-clockwise direction about a first pivotal axis 35 until it takes up the position shown in bold outline in Figure 4.

The first part is provided with a pair of projections, one of which is shown at 40, the other being on the other side wall 21 and the second part is provided with a pair of apertures, one of which is shown at 41.

The projection 40 and the aperture 41 are dimensioned such that when the second part takes up its secured position, as shown in bold outline in Figure 4, the projections 40 will project into apertures 41 and hence assist in preventing undesired release of the catch.

During movement of the second part 12 to its secured position, as shown in bold outline in Figure 4, the ends 15 and 16 of band 14 will be drawn towards each other hence firmly clamping the lid 30 to the container 31. Movement of the second part 12 towards the secure position of the catch also causes a line adjoining the point of connection of the hook 37 with aperture 38 to the second pivotal axis 36 to pass through the first pivotal axis 35 and hence movement of the catch from its released to its secure position will move through an overcentre position thus causing the catch to be biased, by tension in the band 14, towards a secure position.

The first part 11 is provided with a pair of oval apertures, one of which is shown at 43, and the second part 12 is provided with similar oval apertures at 44 and 45. When the catch is in its secured position, all four apertures will be aligned with each other enabling a band or other fastening member to be passed therethrough to prevent unwanted or unauthorised release of the catch.

The apertures could have passed therethrough, for example, the staple of a padlock or some other security means.

The dimensions of the first part 11, the second part 12 and the band 14 are such that when the catch is in its secured position the second part 12 accommodates almost completely the first part 11 and the outer end of the second part 12 overlies and partly accommodates the band 14.

Such dimensioning ensures that the catch projects as little as possible from the band 14 hence making release of the catch through contact with an external member more unlikely.

The second part 12 is a channel-like member having side walls 17 and 18. the side walls 17 and 18 are of a height such that in some cases they will overlap the respective edges of the band 14.

The depth of the side walls 17 and 18 enables the catch to be used on bands of different radius and whereas when it is used on a band of relatively small radius, there will be a considerable overlap between the side walls 17 and 18 and the band 14, it may also be used on much larger bands without leaving any substantial gap between the second part 12 and the band 14.

The third part 13 is provided with a curved region 19 which enables some give in the first part 19 if the distance between the fixing points 24 and 38 on the band 14 was greater than expected, this enables the catch to act with the band 14 to cause successful securing and permitting a slight straightening of the part 19 of the third part 13 and without causing damage to the band 14 or the catch.

Referring now to Figurs 5 and 6, an alternative method of securing the first part of the catch to the band is shown.

The first part, generally indicated at 50 is provided with a pressed-out part 51 which is adapted to engage in a through bore 52 provided in end region 53 of a band, the same as the band 14.

The end part 53 is provided with one chamfered edge region 54 so as to allow engagement of the tongue 51 within the through bore 52 of the first part 50 substantially at right angles to the circumferential axis of the band and then by relative movement between the two parts, the tang 55 is aligned with the end of the band and may then be bent over so as to secure the first part 50 to the end part 53 of the band.

Referring in addition to Figure 6, it will be seen that the tongue 51 is raised from the material from which the first part 50 is formed and is provided with a curved region 56, the curved region 56 ensures that there is maximum surface contact with the edge of the through bore 52.

The curved region 56 is very important since it spreads the load over a greater surface area to the band and prevents tearing of the material from which the band is made which is otherwise likely to occur if the join region 56 between the tongue 51 and the first part was straight.

The catch of the present invention thus provides a very secure fixing and is particularly suitable for use with a band, such as the band shown at 14, for securing a lid 30 to a container 31.

## Claims

1. An overcentre catch adapted to secure together end portions (15,16) of a band (14) for securing a lid (30) of a container (31) said catch comprising a first part (11,50) having first attachment means (23,51) for attachment to one end (15) of the band (14), a second part (12) pivotally connected to said first part (11,50) about a pivotal axis (35), a third part (13) movably connected to said second part (12), said third part having second attachment means (37) for attachment to the other end (16) of the band (14), said third part (13) being movable between an engaging position in which said third part (13) may be engaged with said other end (16) of the band (14) and a secure position, movement to which, from said engaging position causes said first (15) and second (16) members to be moved or urged towards each other and in that said second part (12) is moved such that a line connecting the point of connection between the third part (13) and said other end of the band and the movable connection between the second (12) and third (13) parts crosses said first pivotal axis (35) so that the catch (10) moves through an overcentre position, said first attachment means comprising a projection (23,51) adapted to locate in an aperture (24,52) in said one end (15) of said band (14), characterised in that the dimensions of said projection (23,51) and said aperture (24,52) permit of at least limited relative sliding movement of the first part (11,50) along said band (14) and limited relative rotational movement between the first part (11,50) and said band (14) so as to enable the first part (11,50) to be located on the hand (14) in a first position and moved by said relative rotational and/or sliding movement to a proper secured position relative to said band (14), and in that said second attachment means (37) co-operates with complementary attachment means (38) on the other end (16) of the band (14) in a manner that permits of some relative angular movement between the third part (13) and the band then the second attachment means is in an attached position and in that said first part (11,50) includes additional securing means (28) adapted to cooperate with said one end (15) of said band (14) to secure said first part (50) to said one end (15) of said band (14).

2. A catch means according to Claim 1 characterised in that the projection on said first part (50) comprises a tongue (51) formed from the material of said first part and is pressed out therefrom.

3. A catch means according to Claim 1 characterised in that the projection on said first part (11) comprises a stud-like member (23) adapted to co-operate with a key-hole type aperture (24) formed in said band (14).

4. A catch means according to any one of Claims 1 to 3 wherein the dimensions of said projection (23,51) and said aperture (24,52) are such that said first part (11,50) may be placed in abutment with said band (14) in a position such that said projection (23,51) projects through part of said aperture (24,52) whereafter relative sliding movement between said first part (11,50) and said band (14) is possible so that said projection (23,51) locates in a part of said aperture (24,52) so that said first part (11,50) and said band (14) are engaged wherein relative rotational movement between said first part (11,50) and said band enables the first part to take up a proper secured position relative to said band (14).

5. A catch means according to any one of the preceding claims characterised in that said securing means comprises a projection (28,55) provided on said first part (11,50), said projection being adapted to be deformed so as to engage with said band (14).

6. A catch means according to any one of the preceding claims characterised in that said third part comprises an elongate hook-like member (13) pivotally connected (36) to said second part (12) adjacent one end of said third part, said hook-like member (13) being engageable with a recess (38) provided in the other end (16) of said band (14).

7. A catch means according to any one of the preceding claims characterised in that said second part comprises a lever like member (12) pivotally connected (35) at one end to said first part (11), the pivotal connection (36) with said third part (13) being positioned such that the distance between the pivotal connection (35) and said pivotal connection (36) is shorter than the distance between the pivotal connection (36) and the end of said second part (12) opposite from the end provided with said first pivotal Connection (35).

8. A catch means according to any one of the preceding claims characterised in that said first part (11,50) and said second part (12) are dimensioned such that when the catch is in its secured position the first part (11,50) is accommodated within at least part of said second part (12).

9. A catch means according to any one of the preceding claims characterised in that interference means (40,41) are provided on said second part (12) and said first part (11,50) to hinder release of said catch means from its securing position.

10. A catch means according to Claim 9 characterised in that said interference means comprises a projection (40) on either of said First (11,50) or said second (12) parts and an aperture or recess (41) on the other, said projection (40) and recess (41) being adapted to co-operate with each other when said catch is in its securing position.

## Patentansprüche

1. Ein Kniespannhebel, der dazu eingerichtet ist, Endabschnitte (15, 16) eines Bandes (14) zum Befestigen eines Deckels (30) eines Behälters (31) befestigen, wobei der Spannhebel einen ersten, mit ersten Anbringungsmitteln (23, 51) zur Anbringung des einen Endes (15) des Bandes (14) versehenen Teil (11, 50), einen um eine Schwenkachse (35) verschenkbar mit dem ersten Teil (11, 50) verbundenen zweiten Teil, einen beweglich mit dem zweiten Teil (12) verbundenen dritten, mit zweite Anbringungsmittel (37) zur Anbringung des anderen Endes (16) des Bandes (14) versehenen Teil, wobei der dritte Teil (13) beweglich zwischen einer Eingriffsposition, in der der dritte Teil (13) mit dem anderen Ende (16) des Bandes (14) in Eingriff sein kann und einer Sicherungsposition beweglich ist, wobei die Bewegung in diese Position von der Eingriffsposition bewirkt, daß das erste (15) und das zweite (16) Element zueinander bewegt oder gezwungen werden und wobei das zweite Teil (12) derart bewegt wird, daß eine den Verbindungspunkt zwischen dem dritten Teil (13) und dem anderen Ende des Bandes und die bewegliche Verbindung zwischen dem zweiten (12) und dem dritten (13) Teil die erste Schwenkachse (35) verbindende Linie kreuzt, so daß der Hebel (10) sich durch eine übermittige Position bewegt, wobei das erste Anbringungsmittel einen Vorsprung (23, 51) aufweist, der dazu eingerichtet ist, sich in einer Öffnung (24, 52) in dem einen Ende (15) des Bandes (14) anzuordnen, dadurch gekennzeichnet, daß die Erstreckungen des Vorsprungs (23, 51) und der Öffnung (24, 52) wenigstens eine begrenzte Relativgleitbewegung des ersten Teiles (11, 50) entlang des Bandes (14) und eine begrenzte Drehbewegung zwischen dem ersten Teil (11, 50) und dem Band (14) ermöglichen, um es so dem ersten Teil (11, 50) zu erlauben, auf dem Band (14) in einer ersten Position angeordnet zu werden und durch die Relativbewegung und/oder die Gleitbewegung in eine geeignet gesicherte Position relativ zu dem Band (14) bewegt zu werden und dadurch, daß das zweite Anbringungsmittel (37) mit komplementären Anbringungsmitteln (38) an dem anderen Ende (16) des Bandes (14) in einer Art und Weise zusammenwirkt, daß eine gewisse Winkelbewegung zwischen dem dritten Teil (13) und dem Band ermöglichen, wenn das zweite Anbringungsmittel in einer Anbringungsposition ist und daß das erste Teil (11, 50) weitere Sicherungsmittel (28) aufweist, die dazu einrichtet sind, mit dem einen Ende (15) des Bandes (14) zusammenzuwirken, um das erste Teil (50) mit dem anderen Ende (15) des Bandes (14) zu verbinden.

2. Ein Spannhebel nach Anspruch 1, dadurch gekennzeichnet, daß der Vorsprung auf dem ersten Teil (50) eine Zunge (51) aufweist, die aus dem Material des ersten Teiles gebildet ist und aus diesem herausgepreßt ist.

3. Ein Spannhebel nach Anspruch 1, dadurch gekennzeichnet, daß der Vorsprung auf dem ersten Teil (11) ein bolzenartiges Element (23) aufweist, das dazu eingerichtet ist, mit einer schlüssellochartigen Öffnung (24), die in dem Band (14) ausgebildet ist, zusammenzuwirken.

4. Ein Spannhebel nach einem der Ansprüche 1 - 3, wobei die Erstreckungen des Vorsprungs (23, 51) und der Öffnung (24, 52) derart sind, daß das erste Teil (11, 50) an dem Band (14) anliegend in einer Position derart plaziert werden kann, daß der Vorsprung (23, 51) durch einen Teil der Öffnung (24, 52) vorragt, woraufhin eine relative Gleitbewegung zwischen dem ersten Teil (11, 50) und dem Band (14) möglich ist, so daß der Vorsprung (23, 51) in einem Teil der Öffnung (24, 53) angeordnet wird, so daß der erste Teil (11, 50) und das Band (14) in Eingriff sind, woraufhin eine relative Drehbewegung zwischen den ersten Teil (11, 50) und dem Band es dem ersten Teil erlaubt, eine geeignete gesicherte Position relativ zu dem Band (14) anzunehmen.

5. Ein Spannhebel nach einem der vorangehenden Ansprüche, dadurch gekennzeichnet, daß das Sicherungsmittel einen Vorsprung (28, 55) aufweist, der auf dem ersten Teil (11, 50) vorgesehen ist, wobei der Vorsprung dazu eingerichtet ist, deformiert zu werden, um mit dem Band (14) zusammenzuwirken.

6. Ein Spannhebel nach einem der vorangehenden Ansprüche, dadurch gekennzeichnet, daß der dritte Teil ein längliches hakenartiges Element (13) aufweist, das verschwenkbar (36) mit dem zweiten Teil (12) benachbart einem Ende des dritten Teiles verbunden ist, wobei das hakenartige Element (13) mit einer Ausnehmung (38) in Eingriff gebracht werden kann, die an dem anderen Ende (16) des Bandes (14) vorgesehen ist.

7. Ein Spannhebel nach einem der vorangehenden Ansprüche, dadurch gekennzeichnet, daß das zweite Teil ein hebelartiges Element (12) aufweist, das verschwenkbar (35) an dem einen Ende des ersten Teiles (11) verbunden ist, wobei die Schwenkverbindung (36) mit dem dritten Teil (13) derart positioniert ist, daß der Abstand zwischen der Schwenkverbindung (35) und der Schwenkverbindung (36) größer ist als der Abstand zwischen der Schwenkverbindung (36) und dem zweiten Teiles (12), das dem Ende, das mit der ersten Schwenkverbindung (35) versehen ist, gegenüber liegt.

8. Ein Spannhebel nach einem der vorangehenden Ansprüche, dadurch gekennzeichnet, daß das erste Teil (11, 50) und das zweite Teil (12) derart dimensioniert sind, daß dann, wenn der Spannhebel in seiner gesicherten Position ist, der erste Teil (11, 50) von wenigstens einem Teil des zweiten Teiles (12) aufgenommen wird.

9. Ein Spannhebel nach einem der vorangehenden Ansprüche, dadurch gekennzeichnet, daß Eingriffsmittel (40, 41) auf dem zweiten Teil (12) und dem ersten Teil (11, 50) vorgesehen sind, um eine Freigabe des Spannhebels aus seiner Sicherungsposition zu verhindern.

10. Ein Spannhebel nach Anspruch 9, dadurch gekennzeichnet, daß das Eingriffsmittel einen Vorsprung (40) entweder auf dem ersten (11, 50) oder aber dem zweiten (12) Teil und eine Öffnung oder Ausnehmung (41) auf dem anderen Teil aufweist, wobei der Vorsprung (40) und die Ausnehmung (41) dazu eingerichtet sind, miteinander zusammenzuwirken, wenn der Spannhebel in seiner Sicherungsposition ist.

## Revendications

1. Bloqueur à détente brusque adapté pour fixer ensemble les parties d'extrémité (15, 16) d'une bande (14) pour serrer un couvercle (30) d'un conteneur (31) ledit arrêt comprenant une première partie (11,50) disposant d'un premier moyen de serrage (23, 51) pour serrer une extrémité (15) de la bande (14), une seconde partie (12) qui est reliée à ladite première partie (11, 50) par pivotement autour d'un axe de pivotement (35), une troisième partie (13) reliée de façon mobile à ladite seconde partie (12), ladite troisième partie disposant d'un second moyen de serrage (37) pour être serrée à l'autre extrémité (16) de la bande (14), ladite troisième partie (13) pouvant se déplacer entre une position d'enclenchement dans laquelle ladite troisième partie (13) peut s'enclencher avec ladite autre extrémité (16) de la bande (14) et une position de serrage, déplacement à partir de ladite position d'enclenchement qui fait se déplacer ou se presser l'un contre l'autre lesdits premier (15) et second (16) éléments et dans lequel ladite seconde partie (12) se déplace de telle sorte qu'une ligne reliant le point de connexion entre la troisième partie (13) et ladite autre extrémité de la bande et la connexion mobile entre les seconde (12) et troisième (13) parties traverse ledit premier axe de pivotement (35) de telle sorte que l'arrêt (10) se déplace à travers une position de détente brusque, ledit premier moyen de serrage comprend une saillie (23, 51) adaptée pour se placer dans une ouverture (24, 52) dans ladite une extrémité (15) de ladite bande (14), caractérisé en ce que les dimensions de ladite saillie (23, 51) et de ladite ouverture (24, 52) permettent un mouvement de glissement relatif au moins limité de la première partie (11, 50) le long de ladite bande (14) et un mouvement de rotation relatif limité entre la première partie (11, 50) et ladite bande (14) de façon à pouvoir placer la première partie (11, 50) sur la bande (14) dans une première position et à la déplacer par ledit mouvement relatif de rotation et/ou de glissement à une position convenable de serrage par rapport à ladite bande (14), et en ce que ledit second moyen de serrage (37) coopère avec le moyen de serrage complémentaire (38) à l'autre extrémité (16) de la bande (14) d'une manière qui permet un certain déplacement angulaire relatif entre la troisième partie (13) et la bande quand le second moyen de serrage est en position de serrage et en ce que ladite première partie (11, 50) comprend un moyen de serrage complémentaire (28) adapté pour coopérer avec ladite une extrémité (15) de ladite bande (14) pour serrer ladite première partie (50) sur ladite extrémité (15) de ladite bande (14).

2. Bloqueur selon la recendication 1 caractérisé en ce que la saillie sur ladite première partie (50) comprend une languette formée à partir du matériau de ladite première partie et qui s'en dégage.

3. Bloqueur selon la revendication 1 caractérisé en ce que la saillie de ladite première partie (11) comprend un élément de type colonnette (23) adaptée pour coopérer avec une ouverture de type trou de serrure (24) disposée dans ladite bande (14).

4. Bloqueur selon l'une quelconque des revendications 1 à 3 dans laquelle les dimensions de ladite saillie (23, 51) et de ladite ouverture (24, 52) sont telles que ladite première partie (11, 50) peut être placée en aboutement avec ladite bande (14) à une position telle que ladite saillie (23, 51) sort en partie de ladite ouverture (24, 52) après quoi un déplacement par glissement relatif entre la première partie (11, 50) et ladite bande (14) est possible de telle sorte que ladite saillie (23, 51) se place dans une partie de ladite ouverture (24, 52) de façon à ce que ladite première partie (11, 50) et ladite bande (14) soient enclenchées et dans lequel un mouvement de rotation relatif entre ladite première partie (11, 50) et ladite bande permet à la première partie de prendre une position de serrage convenable par rapport à ladite bande (14).

5. Bloqueur selon l'une quelconque des revendications précédentes caractérisé en ce que ledit moyen de serrage comprend une saillie (28, 55) disposée sur la première partie (11, 50), ladite saillie étant adaptée à se déformer de façon à s'enclencher avec ladite bande (14).

6. Bloqueur selon l'une quelconque des revendications précédentes caractérisé en ce que ladite troisième partie comprend un élément allongé de type crochet (18) relié par pivotement (36) à ladite seconde partie (12) adjacente à une extrémité de ladite troisième partie, ledit élément de type crochet (13) pouvant s'enclencher dans un évidement (38) disposé dans l'autre extrémité (16) de ladite bande (14).

7. Bloqueur selon l'une quelconque des revendications précédentes caractérisé en ce que ladite seconde partie comprend un élément de type levier (12) relié par pivotement (35) à une extrémité de ladite première partie (11), la connexion de pivotement (36) avec ladite troisième partie étant positionnée de telle sorte que la distance entre la connexion de pivotement (35) et ladite connexion de pivotement (36) est plus courte que la distance entre la connexion de pivotement (36) et l'extrémité de ladite seconde partie (12) opposée à l'extrémité qui est munie de ladite première connexion de pivotement (35).

8. Bloqueur selon l'une quelconque des revendications précédentes caractérisé en ce que ladite première partie (11, 50) et ladite seconde partie (12) sont dimensionnées de telle sorte que lorsque le bloqueur est en position de serrage la première partie (11, 50) est contenue au moins partiellement à l'intérieur de ladite seconde partie (12).

9. Bloqueur selon l'une quelconque des revendications précédentes caractérisé en ce que des moyens d'accrochage (40, 41) sont disposés sur ladite seconde partie (12) et sur ladite première partie (11, 50) pour empêcher la libération dudit bloqueur de sa position de serrage.

10. Bloqueur selon la revendication 9 caractérisé en ce que lesdits moyens d'accrochage comprenennt une saillie (40) sur l'une ou l'autre desdites première (11, 50) ou seconde (12) parties et une ouverture ou un évidement (41) sur l'autre partie, ladite saillie (40) et ledit évidement (41) étant adaptés pour coopérer l'un avec l'autre quand ledit bloqueur est sur sa position de serrage.
